Europäisches Patentamt

European Patent Office

Office européen des brevets

(19)

(11) Veröffentlichungsnummer: **0 183 894 B1**

(12) **EUROPÄISCHE PATENTSCHRIFT**

(45) Veröffentlichungstag der Patentschrift: **24.07.91**

(51) Int. Cl.⁵: **C02F 1/64, C02F 1/72, C02F 5/08**

(21) Anmeldenummer: **85100725.2**

(22) Anmeldetag: **24.01.85**

Die Akte enthält technische Angaben, die nach dem Eingang der Anmeldung eingereicht wurden und die nicht in dieser Patentschrift enthalten sind.

(54) **Verwendung von Mischung aus organischen und/oder anorganischen Säuren und/oder sauren Salzen zur Entfernung von eisen- und manganhaltigen Ablagerungen und Verockerungen.**

(30) Priorität: **30.11.84 EP 84114594**

(43) Veröffentlichungstag der Anmeldung:
**11.06.86 Patentblatt 86/24**

(45) Bekanntmachung des Hinweises auf die Patenterteilung:
**24.07.91 Patentblatt 91/30**

(84) Benannte Vertragsstaaten:
**AT BE CH DE FR GB IT LI LU NL SE**

(56) Entgegenhaltungen:
**EP-A- 0 136 973       WO-A-84/02125**
**DE-A- 2 005 507       DE-A- 3 136 457**
**DE-A- 3 504 394       GB-A- 360 126**
**US-A- 3 556 711**

Prospekt DEGUSSA "CAROAT - Peroxomo-nosulfat Verbindung"

(73) Patentinhaber: **Feldmann-Chemie GmbH**
**Salzstrasse 18**
**W-8084 Inning / Ammersee(DE)**

(72) Erfinder: **Der Erfinder hat auf seine Nennung verzichtet**

(74) Vertreter: **Säger, Manfred, Dipl.-Ing. et al**
**Säger & Partner Postfach 81 08 09**
**W-8000 München 81(DE)**

## Beschreibung

Die Erfindung betrifft die Verwendung einer Mischung gemäß dem Hauptanspruch zur Entfernung eisen- und manganhaltiger Ablagerungen und Verockerungen aus Trinkwasserversorgungsanlagen und Brunnen.

Die Problematik beim Entfernen von eisen- und manganhaltigen Ablagerungen, Anlagerungen, Sedimenten und Inkrustierungen aus Trinkwasserversorgungsanlagen, z.B. Brunnen, Rohrleitungen, Speicherbehältern und Filtern, ist hinlänglich bekannt. Es sind auch schon einige Verbindungen bekannt, mit denen diese Ablagerungen gelöst werden können, wie z.B. Citronensäure, Weinsäure, L-Ascorbinsäure, Formamidinsulfinsäure, Hydrazide und Wasserstoffperoxid.

Mit steigenden Anforderungen in Bezug auf den Schutz des Trinkwassers vor toxischen Stoffen und zwecks Verminderung der Abwasserbelastung durch oxidierbare und/oder sauerstoffzehrende Stoffe wurde die Suche nach neuen Konzepten erforderlich, um Eisenoxide, vor allem Mangan-IV-oxid sowie komplexe Gemische aus diesen Verbindungen mit anderen Wasserinhaltsstoffen zu lösen oder in eine leicht lösliche Form umzuwandeln.

Stand der Technik ist die Verwendung von Ascorbinsäure sowie von Wasserstoffperoxid als Reduktionsmittel, weil damit auch Mangan-IV-oxid leicht in eine lösliche Form gebracht werden kann.

Von der Wirksamkeit und der geringen Toxizität her gesehen ist Ascorbinsäure ein gut geeigneter Stoff, der sich im Abwasser aber dann als problematisch erwiesen hat, wenn die Anwendungsvorschriften nicht strikt eingehalten worden sind.

Wasserstoffperoxid ist sehr reaktiv und bildet beim Abmischen mit Säuren schleimhautreizende und ätzende Verbindungen. Verdünnte Wasserstoffperoxidlösungen sind darüber hinaus nicht sehr lagerstabil.

Die DE-A-2 005 507 beschreibt ein Mittel zur Entfernung von Metalloxiden und Kesselstein, das eine trockene nicht toxische wasserlösliche organische Säure und ein trockenes wasserlösliches Alkali- oder Erdalkalisalz einer anorganischen Säure enthält. Das Mittel kann als zusätzliche Sauerstoffbleichmittel Kaliumpersulfate enthalten. Solche Mittel wirken nicht gegen manganhaltige Verockerungen.

In der nicht vorveröffentlichten EP-A-0 136 973 ist eine Zusammensetzung zur Aufbereitung und Entkeimung von Gebrauchswasser, beispielsweise von Schwimmbadwasser, beschrieben. Das Mittel, das Persulfate oder Perborate enthalten kann, wird dem Wasser zugesetzt. Die Entfernung von Ablagerungen oder Verockerungen mit einem solchen Mittel ist in der EP-A-0 136 973 nicht beschrieben.

Die GB-A- 360 126 offenbart ein Mittel zum Beizen oxidierter Metalle, das aus Schwefelsäure und einem Persulfat besteht. Zum Entfernen manganhaltiger Verockerungen sind solche Mittel nicht geeignet.

Der vorliegenden Erfindung liegt die Aufgabe zugrunde, eine Möglichkeit zur Entfernung von eisen- und manganhaltigen Ablagerungen und Verockerungen aus Trinkwasseranlagen und Brunnen zu schaffen, das einerseits wirksam ist, ohne übermäßig reaktiv zu sein, und das andererseits das Abwasser nicht über Gebühr belastet, z. B. beim Ablassen in den Vorfluter.

Diese Aufgabe wird durch die Verwendung einer Mischung gemäß dem Hauptanspruch gelöst. Bei der erfindungsgemäßen Verwendung entstehen keinerlei toxische Rückstände und auch kein Nährboden wie beim Stand der Technik, z. B. bei Citronensäure, für Keimbildung sowie Bakterien-Wachstum. Die Wirkstoffe sind starke Reduktionsmittel, sodaß sie durch Mangan-IV-oxid oxidiert werden können, welches dann in eine leicht lösliche Form übergeht. Bei der erfindungsgemäßen Verwendung entstehen weder toxische Rückstände noch keimfreundliche Substrate, wie es beim Stand der Technik der Fall ist. Darüber hinaus entstehen bei jeder Reaktion nur solche Stoffe, die ohnehin in jeder Wasseranlage anzutreffen sind.

Zweckmäßige Ausgestaltungen und Weiterbildungen der Erfindung sind in den Unteransprüchen gekennzeichnet.

Die für die erfindungsgemäße Verwendung vorgesehene Mischung kann entweder eine wässrige Lösung oder eine pulverisierte oder granulierte Feststoff-Formulierung sein, sie kann im letzteren Fall als Gerüstbildner Polyaldehydcarbonsäuren, Phosphate und Sulfate enthalten.

Die Erfindung wird nachfolgend anhand der Beispiele näher erläutert.

BEISPIELE:

1. Ein Trinkwasserbehälter von 1000 m³ Volumen, dessen wasserbenetzte Flächen aus Beton bestanden, war mit einer ca. 0.5 bis 1 mm dicken Schicht aus Eisenodixhydrat und Mangan-IV-oxid inkrustiert. Wenige Sekunden nach Aufsprühen einer wässrigen Lösung der erfindungsgemäßen Mischung entfärbte sich der ursprünglich tief schwarzbraune Belag und konnte leicht abgewaschen werden.

2. Eine Rohrleitung aus Eisenmit einer Nennweite von 1 Zoll und einer Gesamtlänge von 20 Metern war durch Anlagerungen von Calciumcarbonat und Mangan-IV-oxid fast völlig verstopft. Durch Spülen mit einer wässrigen Lösung der erfindungsgemäßen Mischung konnte der Rohrquerschnitt wieder völlig freigelegt werden.

3. Eine Sprühkammer von 30m³ Rauminhalt hatte auf den Wänden und auf allen Einbauten einen 2 bis 3 mm dicken Belag von sulfidhaltigem Eisenoxid. Durch Einsatz einer wässrigen Lösung der erfindungsgemäßen Mischung konnte eine Entkrustierung ohne störenden Schwefelwasserstoffgeruch vorgenommen werden.

4. Die erfindungsgemäße Mischung hat eine deutliche Abtötungswirkung auf Mikroorganismen, wie z.B. Algen, stark geruchsbildende Pilze und/oder Bakterien. Teile eines offenen Filterbeckens, die durch Schleimbildner stark kontaminiert waren, konnten durch den Einsatz einer wässrigen Lösung der erfindungsgemäßen Mischung sauber und geruchlos gemacht werden.

5. Ein Trinkwasserbehälter von 2.000m³ Volumen, dessen wasserbenetzte Fläche mit hochempfindlicher Farbe auf der Basis weißen Zements beschichtet waren, hatte deutliche Ablagerungen von Braunstein. Kurze Zeit nach Aufsprüchen einer wässrigen Lösung der erfindungsgemäßen Mischung entfärbte sich der ursprüngliche, tiefschwarze Belag und konnte danach leicht abgewaschen werden. Die Beschichtung blieb unbeeinflußt.

6. Ein Wasserturmbehälter, der mit PVC-Folie ausgekleidet war, zeigte einen Mischbelag aus Calciumcarbonat, Braunstein und organischen Ablagerungen. Durch Anwendung einer wässrigen Lösung der erfindungsgemäßen Mischung konnte diese Inkrustation beseitigt werden, ohne daß Verfärbungen auf der Folie zurückblieben.

## Patentansprüche

1. Verwendung einer Mischung aus organischen und/oder anorganischen Säuren und/oder sauren Salzen, die als Wirkkomponente Natrium-, Kalium-, Ammonium-, Calcium- oder Magnesiumperoxoborat in Form des Mono- bis Tetrahydrats oder Harnstoffperhydrat enthalten, zur Entfernung eisen- und manganhaltiger Ablagerungen und Verockerungen aus Trinkwasserversorgungsanlagen und Brunnen.

2. Verwendung nach Anspruch 1, dadurch gekennzeichnet, daß die Mischung in fester oder flüssiger Form vorliegt.

3. Verwendung nach Anspruch 1, dadurch gekennzeichnet, daß die Wirkkomponente in der Mischung in einer Konzentration von 0,5 bis 6 Gew.-%, vorzugsweise 3 oder 4 Gew.-%, enthalten ist.

4. Verwendung mach Anspruch 1, dadurch gekennzeichnet, daß die Wirkkomponente in der Mischung in einer Konzentration von 0,1 bis 1 Gew.-%, vorzugsweise 0,2 Gew.-%, enthalten ist.

5. Verwendung nach einem der vorhergehenden Ansprüche, dadurch gekennzeichnet, daß als weitere Inhaltsstoffe 1 bis 5 Gew.-% organischer Säuren oder saurer Salze enthalten sind.

6. Verwendung nach einem der vorhergehenden Ansprüche, dadurch gekennzeichnet, daß als weitere Inhaltsstoffe 1 bis 10 Gew.-% anorganischer Säuren oder saurer Salze enthalten sind.

7. Verwendung nach einem der vorhergehenden Ansprüche, dadurch gekennzeichnet, daß 0,1 bis 2 Gew.-% oxidationsbeständiger Tenside enthalten sind.

8. Verwendung nach einem der vorhergehenden Ansprüche, dadurch gekennzeichnet, daß 0,1 bis 2 Gew.-% säure- und oxidationsbetändiger Inhibitoren enthalten sind.

9. Verwendung nach einem der vorhergehdnen Ansprüche, dadurch gekennzeichnet, daß die Mischung als wässrige Lösung vorliegt.

10. Verwendung nach einem der vorhergehenden Ansprüche, dadurch gekennzeichnet, daß die Mischung als Feststoff-Formulierung vorliegt.

11. Verwendung nach Anspruch 10, dadurch gekennzeichnet, daß als Gerüstbildner Polyaldehydcarbonsäuren, Phosphate und Sulfate enthalten sind.

## Claims

1. Use of a mixture made of organic and/or inorganic acids and/or acid salts, which contain as the active component sodium-, potassium-, ammonium-, calcium- or magnesium-peroxoborate in the form of the mono to tetrahydrates or urea perhydrate, for removing deposits containing iron and manganese and for removing discolouration from drinking water supply systems and fountains.

2. Use according to claim 1, **characterised in that** the mixture is present in solid or liquid form.

3. Use according to claim 1, **characterised in that** the active component in the mixture is contained in a concentration of 0.5 to 6 % by weight, preferably 3 or 4 % by weight.

4. Use according to claim 1, **characterised in that** the active component in the mixture is contained in a concentration of 0.1 to 1 % by weight, preferably 0.2 % by weight.

5. Use according to any one of the preceding claims, **characterised in that** 1 to 5 % by weight of organic acids or acidic salts are included as further ingredients.

6. Use according to any one of the preceding claims, **characterised in that** 1 to 10 % by weight of inorganic acids or acid salts are included as further ingredients.

7. Use according to any one of the preceding claims, **characterised in that** 0.1 to 2 % by weight of oxidation-resistant surfactants are included.

8. Use according to any one of the preceding claims, **characterised in that** 0.1 to 2 % by weight of acid- and oxidation- resistant inhibitors are included.

9. Use according to any one of the preceding claims, **characterised in that** the mixture is present as an aqueous solution.

10. Use according to any one of the preceding claims, **characterised in that** the mixture is present as a solid formulation.

11. Use according to claim 10, **characterised in that** polyaldehyde carbonic acids, phosphates and sulphates are included as builders.

## Revendications

1. Utilisation d'un mélange d'acides organiques et/ou minéraux et/ou de sels acides, contenant comme composants actifs du peroxoborate de sodium, de potassium, d'ammonium, de calcium ou de magnésium sous forme mono- à tétra-hydratée, ou encore du peroxyde d'urée, pour éliminer les dépôts et incrustations contenant du fer et du manganèse dans les installations d'approvisionnement en eau potable et dans les puits.

2. Utilisation selon la revendication 1, caractérisée en ce que le mélange se présente sous forme solide ou liquide.

3. Utilisation selon la revendication 1, caractérisée en ce que la concentration du composant actif dans le mélange est de 0,5 à 6 % en poids, de préférence de 3 ou 4 % en poids.

4. Utilisation selon la revendication 1, caractérisée en ce que la concentration du composant actif dans le mélange est de 0,1 à 1 % en poids, de préférence de 0,2 % en poids.

5. Utilisation selon l'une des revendications précédentes, caractérisée en ce que le mélange contient en tant que constituants supplémentaires 1 à 5 % en poids d'acides minéraux ou de sels acides.

6. Utilisation selon l'une des revendications précédentes, caractérisée en ce que le mélange contient comme constituants supplémentaires 1 à 10 % en poids d'acides minéraux ou de sels acides.

7. Utilisation selon l'une des revendications précédentes, caractérisée en ce que le mélange contient de 0,1 à 2 % en poids de tensio-actifs résistant à l'oxydation.

8. Utilisation selon l'une des revendications précédentes, caractérisée en ce que le mélange contient de 0,1 à 2 % en poids d'inhibiteurs résistant aux acides et à l'oxydation.

9. Utilisation selon l'une des revendications précédentes, caractérisée en ce que le mélange se présente sous forme d'une solution aqueuse.

10. Utilisation selon l'une des revendications précédentes, caractérisée en ce que le mélange se présente sous forme d'une formulation solide.

11. Utilisation selon la revendication 10, caractérisée en ce que le mélange contient comme adjuvants des acides polyaldéhydecarboxyliques, des phosphates et des sulfates.